# EUROPÄISCHE PATENTANMELDUNG

(11) **EP 3 135 779 A1**
(43) Veröffentlichungstag der Anmeldung: **01.03.2017**
(21) Anmeldenummer: 15185256.3
(22) Anmeldetag: 15.09.2015
(51) Int. Cl.: C22B 3/02, C22B 3/44, C22B 59/00

(54) **VERFAHREN UND VORRICHTUNG ZUR VERARBEITUNG EINES MINDESTENS EINEN WERTSTOFF, INSBESONDERE AUS DER GRUPPE DER SELTENEN ERDEN, UND BEGLEITSTOFFE AUFWEISENDEN ROHSTOFFS**

(30) Priorität: 24.08.2015 EP 15182167
(71) Anmelder: Siemens Aktiengesellschaft, 80333 München (DE)
(72) Erfinder: Friedrich, Bernd, 52074 Aachen (DE); Hanebuth, Marc, 90482 Nürnberg (DE); Voßenkaul, Daniel, 52064 Aachen (DE); Wolfrum, Sonja, 91052 Erlangen (DE)

(57) **Zusammenfassung**

Die Erfindung betrifft ein Verfahren und eine Vorrichtung zum Auftrennen einer mindestens einen Wertstoff (W), insbesondere ein Element aus der Gruppe der Seltenen Erden, und Begleitstoffe (B), insbesondere verunreinigende Elemente, aufweisenden ersten wässrigen Lösung (21; 41) eines Rohstoffs in dessen Bestandteile. Die Erfindung zeichnet sich dadurch aus, dass aus der ersten wässrigen Lösung (21; 41) der Wertstoff (W) mittels eines hochselektiven Fällungsmittels (23) abgetrennt und das Fällungsmittel (23) wiedergewonnen wird.

## Beschreibung

Die Erfindung betrifft ein Verfahren gemäß dem Oberbegriff des Hauptanspruchs und eine Vorrichtung gemäß dem Oberbegriff des Nebenanspruchs.

Die Erfindung betrifft insbesondere ein Verfahren und eine Vorrichtung zur Gewinnung von Seltenerd-Elementen aus Seltene Erden aufweisenden Erzen, die signifikante Mengen an Begleitstoffen enthalten. Bei einer herkömmlichen Verarbeitung dieser Erze, insbesondere bei einem sogenannten Laugen entsteht eine wässrige Lösung, die neben den zu gewinnenden Seltenerd-Elementen zusätzlich Begleitstoffe enthält, die abgetrennt werden sollen.

Die Elemente der Seltenen Erden sind eine wichtige Quelle für eine Vielzahl von Hightech-Produkten. In den Seltenerd-haltigen Erzen sind jedoch stets signifikante Mengen an Begleitstoffen enthalten. Dies hat zur Folge, dass bei der Verarbeitung dieser Erze, insbesondere bei einem sogenannten Laugen, eine wässrige Lösung entsteht, die neben den Seltenerd-Elementen weitere je nach Situation unerwünschte Substanzen enthält.

Beispielsweise enthalten konventionelle Monazit-haltige Erze oft als zusätzlichen Hauptbestandteil Eisen, welches bei der Produktion der Seltenen Erden in wässriger Lösung von den Seltenen Erden abgetrennt werden muss. Herkömmlicherweise wird dies mittels mehrerer Maßnahmen erreicht, wobei typischerweise mehrere dieser Maßnahmen kombiniert und innerhalb einer Prozesskette durchgeführt werden müssen, um hinreichend reine Seltenerd-Verbindungen zu gewinnen. Zunächst wird nach dem Laugen der pH-Wert erhöht, so dass ein Teil des Eisens als Hydroxid oder als Oxid ausfällt. Hierbei darf der pH-Wert aber nicht zu sehr erhöht werden, da ansonsten auch signifikante Mengen als Seltenerd-Verbindungen ausfielen, was die Ausbeute verkleinern würde. Weiterhin gibt es herkömmlicherweise den Ansatz in einer Separationsanlage, deren Hauptziel die Trennung der unterschiedlichen Seltenerd-Elemente ist, zusätzliche Trennkaskaden für die Abtrennung von Eisen vorzusehen. Hierfür kann ein spezielles Extraktionsmittel notwendig sein, was einen nennenswerten Aufwand bedeutet. Als weitere hier genannte Maßnahme werden in herkömmlicher Weise nach der Trennung der Seltenerd-Elemente diese separat als Oxalate ausgefällt, falls es noch nennenswerte Verunreinigungen mit Eisen geben sollte. Mit dieser herkömmlichen Methode lassen sich Seltenerd-Oxalate hochselektiv in Gegenwart von Eisen ausfällen, wobei letztgenanntes in Lösung bleibt. Der Nachteil dieses Vorgehens ist, dass das Oxalat relativ teuer ist und dass es herkömmlicherweise nicht wiederverwendet wird. Es wird stattdessen in einer nachfolgenden Kalzinierung thermisch zersetzt, wobei ein reines Seltenerd-Oxid zurückbleibt.

Es ist Aufgabe der Erfindung, ein Verfahren und eine Vorrichtung zum Auftrennen einer mindestens einen Wertstoff, insbesondere ein Element aus der Gruppe der Seltenen Erden, und Begleitstoffe, insbesondere verunreinigende Elemente, aufweisenden ersten wässrigen Lösung eines Rohstoffs in dessen Bestandteile kostengünstig und umweltschonend bereitzustellen. Des Weiteren soll das Auftrennen mit im Vergleich zum Stand der Technik hoher Selekivität und großer Ausbeute bei geringem Energieeinsatz ausführbar sein.

Die Aufgabe wird durch ein Verfahren gemäß dem Hauptanspruch und eine Vorrichtung gemäß dem Nebenanspruch gelöst.

Gemäß einem ersten Aspekt wird ein Verfahren zum Auftrennen einer mindestens einen Wertstoff, insbesondere ein Element aus der Gruppe der Seltenen Erden, und Begleitstoffe, insbesondere verunreinigende Elemente, aufweisenden ersten wässrigen Lösung eines Rohstoffs in dessen Bestandteile vorgeschlagen, wobei aus der ersten wässrigen Lösung der Wertstoff mittels eines hochselektiven Fällungsmittels abgetrennt und das Fällungsmittel wiedergewonnen wird.

Gemäß einem zweiten Aspekt wird eine Vorrichtung zum Auftrennen einer mindestens einen Wertstoff, insbesondere ein Element aus der Gruppe der Seltenen Erden, und Begleitstoffe, insbesondere verunreinigende Elemente, aufweisenden ersten wässrigen Lösung eines Rohstoffs in dessen Bestandteile vorgeschlagen, wobei in einer ersten Einheit in einem ersten Schritt mittels zu der ersten wässrigen Lösung ausgeführtes Zuführen eines hochselektiven Fällungsmittels als organisches Salz, insbesondere mit Na-Anteil, aus einer ersten Säure ein das Fällungsmittel, den Wertstoff und Begleitstoffe aufweisender Feststoff ausgefällt wird; in der ersten Einheit in einem zweiten Schritt mittels Abtrennen des Feststoffes eine zweite wässrige Lösung erzeugt wird; in einer zweiten Einheit in einem dritten Schritt mittels Zuführen einer zweiten Säure, insbesondere Mineralsäure, insbesondere Salzsäure, der Feststoff aufgelöst und eine dritte wässrige Lösung aufweisend ein dem Wertstoff aufweisendes gelöstes Salz der zweiten Säure mit der zusätzlich gelösten ersten Säure erzeugt wird; in einer dritten Einheit in einem vierten Schritt mittels Zuführen eines organischen, insbesondere unpolaren, Lösungsmittels, insbesondere Kerosin, und in einer vierten Einheit mittels Zuführen einer Base, insbesondere Natronlauge, das Fällungsmittel aus der ersten Säure als wässrig gelöstes organisches Salz wiedergewonnen und der Wertstoff als wässrig gelöstes Salz abgetrennt wird.

Aktuell werden neben herkömmlichen Lagerstätten ebenso bisher unkonventionelle Lagerstätten von Rohstoffen als Quelle für die Seltenen Erden diskutiert. Beispielsweise hat das Mineral Eudialyt die Vorteile, dass es einerseits einen relativ hohen Anteil an wertvollen schweren Seltenen Erden und gleichzeitig oft lediglich geringe Mengen an radioaktiven Substanzen wie Uran und Thorium enthält. Allerdings sind insbesondere die Seltenerd-Anteile im Mineral insgesamt sehr gering, wodurch mit einer großen Menge an Verunreinigungen während der Separation zu rechnen ist. Im Falle des Eudialyts bestehen diese Verunreinigungen u.a. aus Eisen und Calcium, es ist aber ebenso zusätzlich das Wertelement Zirkonium enthalten. Hinzu kommt, dass es herkömmlicherweise an effizienten Aufbereitungsprozessen für Eudialyt-haltige Erze fehlt, wodurch einige Begleitminerale wie beispielsweise Nephelin oder Zeolith nicht vollständig vor einer Laugung abgetrennt werden können. Diese Minerale weisen meist ebenfalls eine hohe Säurelöslichkeit auf und stellen damit eine weitere Verunreinigungsquelle dar. Zusammenfassend lässt sich sagen, dass bei einer Verarbeitung des vielversprechenden Minerals Eudialyt das vorstehend genannte Problem der Verunreinigung durch Eisen drängender wird, wobei zusätzlich eine Abtrennung und Vermarktung von Zirkonium und etwaiger weiterer Wertstoffe verfolgt wird. Im Prinzip lassen sich sämtliche Elemente herkömmlicherweise in Trennkaskaden mit Hilfe der sogenannten Flüssig-Flüssig-Extraktion voneinander trennen. Dies ist jedoch sehr aufwändig, einerseits apparativ und andererseits im Hinblick auf einen Energie- und Stoffeinsatz. Es ist erfindungsgemäß erkannt worden, dass die Selektivitäten der herkömmlichen Extraktionsmittel der herkömmlichen Flüssig-Flüssig-Extraktion relativ klein sind. Abtrennungen sollen daher erfindungsgemäß bereits vor diesen herkömmlichen Trennkaskaden durchgeführt werden, um den Durchsatz durch diese herkömmlichen Trennkaskaden möglichst klein zu halten. Es ist erfindungsgemäß erkannt worden, dass mit einer Erhöhung des pH-Wertes mit gleichzeitiger Ausfällung von Oxiden bzw. Hydroxiden dieses Ziel nicht erreicht werden kann, da die Selektivitäten hierbei zu klein sind. Es ist erfindungsgemäß erkannt worden, dass Verunreinigungen, Seltene Erden und weitere Wertprodukte sich so derart nicht in ausreichendem Maße voneinander trennen lassen.

In einem ersten Schritt wird mittels zu der ersten wässrigen Lösung ausgeführtes Zuführen des hochselektiven Fällungsmittels als organisches Salz, insbesondere mit Na-Anteil, aus einer ersten Säure ein das Fällungsmittel, den Wertstoff und Begleitstoffe aufweisender Feststoff ausgefällt. In einem zweiten Schritt wird mittels Abtrennen des Feststoffes eine zweite wässrige Lösung erzeugt. In einem dritten Schritt wird mittels Zuführen einer zweiten Säure, insbesondere Mineralsäure, insbesondere Salzsäure, der Feststoff aufgelöst und es wird eine dritte wässrige Lösung aufweisend ein den Wertstoff aufweisendes gelöstes Salz der zweiten Säure mit der zusätzlich gelösten ersten Säure erzeugt. In einem vierten Schritt wird mittels Zuführen eines organischen, insbesondere unpolaren, Lösungsmittels, insbesondere Kerosin, und mittels Zuführen einer Base, insbesondere Natronlauge, das Fällungsmittel aus der ersten Säure als wässrig gelöstes organisches Salz wiedergewonnen und der Wertstoff als wässrig gelöstes Salz abgetrennt.

Weitere vorteilhafte Ausgestaltungen werden in Verbindung mit den Unteransprüchen beansprucht.

Gemäß einer vorteilhaften Ausgestaltung kann vor dem ersten Schritt die erste wässrige Lösung aus dem Rohstoff in Ausgestaltung eines Seltene Erden aufweisenden Minerals, insbesondere Eudialyts, insbesondere in Ausgestaltung eines Erzes oder Erzkonzentrates, mittels Zuführen einer dritten Säure, insbesondere Mineralsäure, insbesondere Salzsäure, und mittels Aufschließens erzeugt werden und können Wertstoffe beispielsweise insbesondere Seltene Erdelemente, Zirkonium, Eisen und/oder Mangan, und Begleitstoffe, beispielsweise insbesondere Calcium, Titan, Thorium und/oder Uran sein. Die erste wässrige Lösung kann beispielsweise über ein sogenanntes Laugen von Eudialyt entstehen.

Gemäß einer weiteren vorteilhaften Ausgestaltung kann das hochselektive Fällungsmittel Oxalate, Succinate, Tartrate, Malonate, Citrate oder Acetate bzw. die entsprechend jeweils zugehörige erste Säure Oxalsäure, Bernsteinsäure, Weinsäure, Malonsäure, Zitronensäure oder Essigsäure umfassen.

Gemäß einer weiteren vorteilhaften Ausgestaltung können die ersten bis vierten Schritte in jeweils aufeinanderfolgenden Zyklen mittels verschiedener hochselektiver Fällungsmittel an der jeweils in einem vorherigen Zyklus im zweiten Schritt erzeugten zweiten wässrigen Lösung anstelle der ersten oder zusammen mit neuer erster wässriger Lösung ausgeführt werden, um nacheinander hochselektiv verschiedene Wertstoffe von Begleitstoffen abzutrennen.

Gemäß einer weiteren vorteilhaften Ausgestaltung können die in dem dritten Schritt zugeführte zweite Säure und/oder eine/die vor dem ersten Schritt zugeführte dritte Säure Salzsäure und die in dem vierten Schritt zugeführte Base Natronlauge sein, die, insbesondere mittels mindestens einer regenerativen Energiequelle, aus einem gelöstes Natriumchlorid aufweisenden Prozessstrom mittels Elektrodialyse mittels einer bipolaren Membran oder einer Chloralkali-Elektrolyse gewonnen werden, wobei das gelöste Natriumchlorid insbesondere aus oder nach dem vierten Schritt gewonnen werden kann.

Gemäß einer weiteren vorteilhaften Ausgestaltung können in dem ersten Schritt vor dem Zuführen des hochselektiven Fällungsmittels mittels Zuführen eines Sulfids Calcium oder Schwermetalle abgetrennt werden.

Gemäß einer weiteren vorteilhaften Ausgestaltung können die innerhalb der im zweiten Schritt erzeugten zweiten wässrigen Lösung enthaltenen Wert- und Begleitstoffe vollständig, beispielsweise als Carbonate, gefällt werden und nach einer Laugung anstelle der ersten oder zusammen mit neuer erster wässriger Lösung in den ersten Schritt zugeführt werden.

Gemäß einer weiteren vorteilhaften Ausgestaltung können die Schritte in einer Gesamteinheit ausgeführt werden, die eine Prozessanlage sein kann, wobei eine Voreinheit ein Aufkonzentrator, eine erste Einheit ein Fällungstank, eine zweite Einheit ein Laugungsreaktor, eine dritte Einheit eine Extraktionseinheit und eine vierte Einheit eine Stripp-Einheit sein kann oder sein können.

Die Erfindung wird anhand von Ausführungsbeispielen in Verbindung mit den Figuren näher beschrieben. Es zeigen:
- Figur 1: ein Ausführungsbeispiel einer herkömmlichen Vorrichtung und eines herkömmlichen Verfahrens;
- Figur 2: ein erstes Ausführungsbeispiel einer erfindungsgemäßen Vorrichtung und eines erfindungsgemäßen Verfahrens;
- Figur 3: ein zweites Ausführungsbeispiel einer erfindungsgemäßen Vorrichtung und eines erfindungsgemäßen Verfahrens;
- Figur 4: ein weiteres Ausführungsbeispiel eines erfindungsgemäßen Verfahrens.

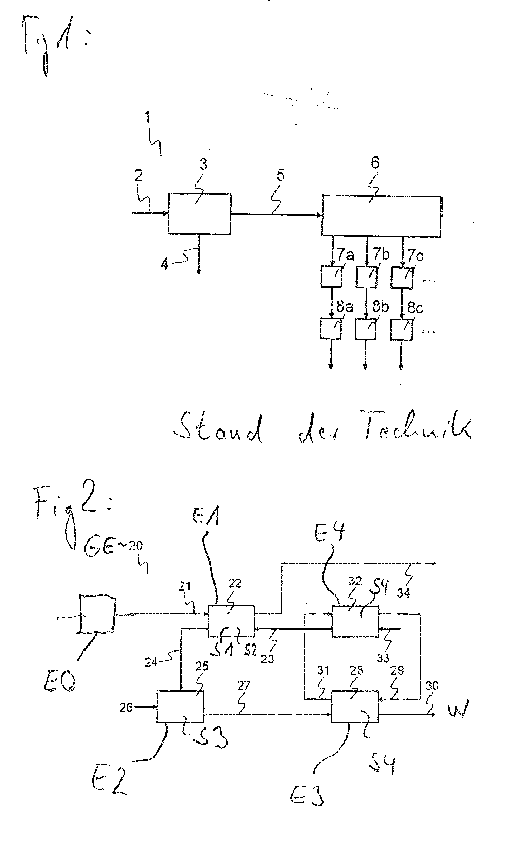

Figur 1 zeigt ein Ausführungsbeispiel einer herkömmlichen Vorrichtung und eines herkömmlichen Verfahrens. Herkömmlicherweise wird für eine Herstellung von Seltenen Erden eine Oxalat-Fällung möglichst vermieden oder erst so spät wie möglich durchgeführt, falls nach einer Trennung von Seltenerd-Elementen noch zu viel Eisen vorliegen sollte. Der Grund hierfür ist, dass ein Oxalat relativ teuer ist und herkömmlicherweise bei einer nachfolgenden Kalzinierung zersetzt wird.

Bei unkonventionellen Seltenerd-haltigen Mineralien, wie es beispielsweise Eudialyt ist, hätte das Vorgehen gemäß dem in Figur 1 dargestellten Stand der Technik jedoch gravierende Nachteile, da im Allgemeinen die Seltenerd-Konzentrationen insgesamt niedriger als in sogenannten konventionellen Erzen sind. Somit gibt es ebenso mehr Nebenbestandteile und zum Teil auch weitere Wertprodukte, die vor den eigentlichen Trennkaskaden für die Trennung der Seltenerd-Elemente separiert werden müssen, um einen apparativen Aufwand sowie den Verbrauch an Energie und Chemikalien möglichst klein zu halten.

Herkömmlicherweise werden hochselektive Fällungsmittel bereits bei der Herstellung von Seltenerd-Elementen verwendet, und zwar bei einer Ausfällung von Seltenerd-Oxalaten in der Gegenwart von Eisen. Dies erfolgt allerdings erst nach der Trennung der Seltenerd-Elemente und zwar direkt vor einer Kalzinierung der Oxalate, wobei diese dabei zerstört werden.

Figur 1 zeigt eine herkömmliche Verarbeitung, wobei nach einer Laugung und Auftrennung von Seltenerd-Elementen anschließend eine Fällung und Kalzinierung ausgeführt wird. 1 zeigt eine herkömmliche Anordnung gemäß dem Stand der Technik. Nach einer Laugung wird eine wässrige Lösung 2 mit Seltenerd-Ionen und weiteren Elementen einer pH-Wert-Anpassung 3 mit gleichzeitiger Feststoff-Fällung zugeführt. Abgetrennte Feststoffe 4 können u.a. Hydroxide bzw. Oxide von Eisen sein. Eine wässrige Lösung 5 mit Seltenerd-Elementen und verbleibenden Verunreinigungen, beispielsweise Fe³⁺, wird Trennkaskaden 6 zur Trennung der Seltenerd-Elemente und verbleibender Verunreinigungen zugeführt. Elemente 7a, 7b und 7c zeigen exemplarisch eine jeweilige Ausfällung der Seltenerd-Elemente, und zwar bei einer ausreichenden Reinheit als Carbonat und ansonsten als Oxalat. Dem schließt sich mit den Elementen 8a, 8b und 8c jeweils eine Kalzinierung zu Seltenerd-Oxiden an, wobei gegebenenfalls vorhandenes Oxalat thermisch zersetzt wird. Die relativ teuren Oxalate werden also zerstört.

Figur 2 zeigt ein erstes Ausführungsbeispiel einer erfindungsgemäßen Vorrichtung und eines erfindungsgemäßen Verfahrens. Im Vergleich zu den Extraktionsmitteln einer herkömmlichen Flüssig-Flüssig-Extraktion können verschiedene Wertstoffe mit Hilfe von hochselektiven Fällungsmitteln, wie es beispielsweise Oxalate sind, mit relativ geringem Aufwand voneinander getrennt werden. Dies wird erfindungsgemäß genutzt. Zweckmäßig ist es, eine derartige Fällung möglichst früh in einer Prozesskette, also insbesondere direkt nach einer Laugung, durchzuführen. Beispielsweise sollen Seltenerd-Elemente direkt nach dieser Laugung in Form ihrer Oxalate ausgefällt werden. Dies führt zunächst zu einem höheren Verbrauch an Oxalat, verglichen mit dem Stand der Technik, da einerseits sämtliche Seltenerd-Elemente und zusätzlich manche Verunreinigungen, wie beispielsweise Calcium mitgefällt werden.

Figur 2 zeigt eine Gesamteinheit GE in Ausgestaltung einer erfindungsgemäßen Anordnung 20 zur selektiven Abtrennung eines Wertstoffes W. In einer Voreinheit E0 vor einem ersten Schritt S1 wird eine erste wässrige Lösung 21 aus einem Rohstoff beispielsweise in Ausgestaltung eines Seltene Erden aufweisenden Minerals, beispielsweise Eudialyts, hier in Form eines Erzkonzentrats erzeugt, in dem das Erzkonzentrat aufgeschlossen wird, wobei dies mittels einer Mineralsäure, insbesondere Salzsäure ausgeführt wird. Während eines ersten Schrittes S1 wird daraufhin ein Feststoff 24 ausgefällt, indem ein organisches Salz, typischerweise in Form einer wässrigen Lösung, zugegeben wird. Es handelt sich insbesondere um ein Salz beispielsweise der Oxalsäure als Ausführungsbeispiel für eine erste Säure 10. Dabei sind insbesondere Natriumsalze besonders vorteilhaft. Dabei wird in einem zweiten Schritt S2 der Feststoff 24 abgetrennt, wobei eine zweite wässrige Lösung 34 zurückbleibt. In einem dritten Schritt S3 wird der abgetrennte Feststoff 24 mit einer zweiten Säure 26, die insbesondere eine Mineralsäure sein kann, aufgelöst, wobei sich eine dritte wässrige Lösung 27 eines Mineralsäuresalzes mit zusätzlich gelöster Oxalsäure als Ausführungsbeispiel der ersten Säure 10 ausbildet. Als Mineralsäure eignet sich insbesondere Salzsäure. Während eines vierten Schrittes S4 wird die Oxalsäure als Ausführungsbeispiel der ersten Säure 10 mit Hilfe eines unpolaren Lösungsmittels 29, das beispielsweise Kerosin sein kann, extrahiert und zurückgewonnen, indem sie mit einer Base 33, wobei Natronlauge besonders vorteilhaft ist, wieder in wässrige Lösung überführt wird. Diese wässrige Lösung ergibt wieder das Fällungsmittel 23 für den ersten Schritt S1. Das verwendete Fällungsmittel 23 ist hochselektiv. Ein Löslichkeitsprodukt für den zu fällenden Wertstoff ist damit vorteilhaft klein, während es für die weiteren, in der Lösung verbleibenden, Wert- und Begleitstoffe groß ist.

Figur 2 zeigt eine erfindungsgemäße Gesamteinheit GE20 für die selektive Fällung eines Wertstoffs W, insbesondere eines Seltenerd-Elements, aus der ersten wässrigen Lösung 21, wobei eine Rückgewinnung des Fällungsmittels 23 mit integriert ist. Die erste wässrige Lösung 21 wird in der Voreinheit E0, die ein erster Laugenreaktor ist, gewonnen. Die erste wässrige Lösung 21 weist ein gelöstes Wertstoffgemisch auf, das beispielsweise Seltenerd-Chloride und FeCl₃ aufweist. In einer ersten Einheit E1, die als Fällungstank ausgeführt sein kann, erfolgt eine Ausfällung mit einer Fest/Flüssig-Trennung, was mit dem Bezugszeichen 22 gekennzeichnet ist. Dort werden der erste Schritt S1 und der zweite Schritt S2 ausgeführt. Als Fällungsmittel 23 wird beispielsweise wässriges Natrium-Oxalat zugeführt. Aus der Einheit E1 wird der abgetrennte Feststoff 24 beispielsweise Seltenerd-Oxalate aus der ersten Einheit E1 abgeführt. Dieser wird in einem Laugenreaktor 25 als zweiter Laugenreaktor als Ausführungsform für eine zweite Einheit E2 zugeführt, wobei beispielsweise ein in wässrige Lösung bringen von Seltenerd-Chloriden und Oxalsäure erfolgt. Hierzu wird eine zweite Säure 26 in Ausgestaltung einer Mineralsäure, insbesondere Salzsäure zugeführt. Entsprechend kann in der zweiten Einheit E2 der dritte Schritt S3 ausgeführt werden. Die zweite Einheit E2 stellt eine dritte wässrige Lösung 27 bereit, die beispielsweise gelöste Seltenerd-Chloride und Oxalsäure enthält. Diese dritte wässrige Lösung 27 gelangt nun in die dritte Einheit E3, die als eine Extraktionseinheit ausgeführt ist, wobei in der Extraktionseinheit 28 ein organisches Lösungsmittel 29 zugeführt wird, wobei beispielsweise die Einheit E3 als Mixer-Settler die Oxalsäure extrahiert. Das unpolare Lösungsmittel 29 kann beispielsweise Kerosin sein. Der dritten Einheit E3 kann eine wässrige Lösung 30 entnommen werden, die beispielsweise Seltenerd-Chloride aufweist, wobei damit der Wertstoff W als Seltenerd-Element als wässrig gelöstes Salz 30 entnommen werden kann. Ein beladenes organisches Lösungsmittel 31 wird nun in Form der Oxalsäure in Kerosin einer vierten Einheit E4 zugeführt, die als Stripp-Einheit bezeichnet werden kann. Diese Stripp-Einheit 32 ist beispielsweise als ein Mixer-Settler zur Rück-Extraktion von Natrium-Oxalat ausgeführt, wobei Natronlauge als Beispiel einer Base 33 zugeführt wird. Ebenso wird eine wässrige Lösung 33 für die Rück-Extraktion der vierten Einheit E4 zugeführt, beispielsweise in Ausgestaltung einer wässrigen Natronlauge. Aus der ersten Einheit E1 kann eine aufgereinigte wässrige Lösung 34 entnommen werden, die beispielsweise FeCl₃ ist.

Figur 2 zeigt eine Gesamteinheit GE20 für das selektive Abtrennen eines Wertstoffes W am Beispiel der Abtrennung von Seltenerd-Elementen mittels dem Ausfällen als Oxalat in Gegenwart von Eisen oder Zirkonium.

Grundsätzlich funktioniert die mit Figur 2 dargestellte Prozessführung ebenso mit dem Ausfällen von Zirkonium als Tartrat in Gegenwart von Eisen oder das Ausfällen von Eisen als Succinat in Gegenwart von Zirkonium bzw. Seltenen Erden. Es kann in allen Fällen das Fällungsmittel 23 mit Hilfe von Säure, insbesondere Salzsäure, und Lauge, insbesondere Natronlauge, wiedergewonnen werden, so dass erfindungsgemäß die relativ teuren Fällungsmittel in Ausgestaltung von hochselektiven Fällungsmitteln 23 nicht verbraucht werden.

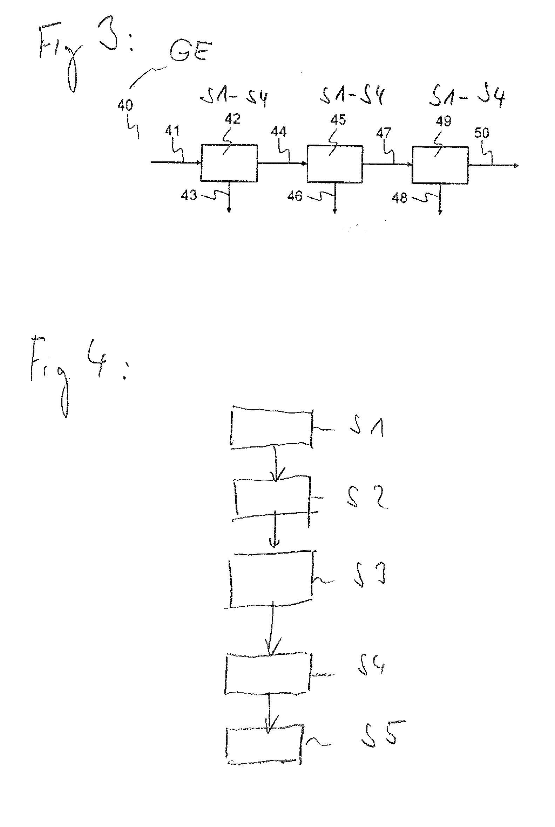

Figur 3 zeigt ein zweites Ausführungsbeispiel eines erfindungsgemäßen Verfahrens und eine erfindungsgemäße Vorrichtung. Figur 3 zeigt eine Gesamteinheit GE insbesondere als eine chemische Prozessanlage 40. Gemäß Figur 2 wurden Oxalate zurückgewonnen und im Kreis geführt, so dass kein tatsächlicher Verbrauch an teuren hochselektiven Fällungsmitteln 23 entstanden ist. Analog wird gemäß Figur 3 zusätzlich zu den Oxalaten, die in einer ersten Schrittfolge S1 bis S4 angewendet wurden, der Einsatz weiterer hier insbesondere zwei weiterer hochselektiver Fällungsmitteln 23 vorgeschlagen. Beispielsweise können in einer zweiten Schrittfolge S1 bis S4 als Fällungsmittel 23 Succinate verwendet werden und in einer dritten Schrittfolge S1 bis S4 können Tartrate als Fällungsmittel 23 verwendet werden. Weitere mögliche hochselektive Fällungsmittel 23 können beispielsweise Malonate, Citrate und/oder Acetate sein. Auf diese Weise können verschiedene Bestandteile 43, 46 und 48 mittels den Zyklen 42, 45 und 49 gewonnen werden. Ebenso diese weiteren Fällungsmittel 23 werden ebenfalls entsprechend Figur 2 zurückgewonnen und im Kreis geführt, sofern sie verwendet werden. Die Fällungsmittel 23 werden somit insgesamt betrachtet nicht verbraucht. Die Rückgewinnung geschieht in einem Prozess insbesondere mit Hilfe von Salzsäure und Natronlauge, die ebenso aus den entstehenden Lösungen, bevorzugt mittels regenerativer Energie, zurückgewonnen werden können.

Gemäß Figur 3 können die Schritte S1 bis S4 nacheinander mit unterschiedlichen Fällungsmitteln 23, beispielsweise einem gelösten Salz der Oxalsäure, Bernsteinsäure, Weinsäure, Essigsäure oder Zitronensäure mit der aus dem zweiten Schritt S2 verbliebenen zweiten wässrigen Lösung 44 und 47 durchgeführt werden, um nacheinander selektiv Wertstoffe W 43, 46 und 48 oder Verunreinigungen bzw. weitere Begleitstoffe B abzutrennen. Effektiv wird so die erste wässrige Lösung 41 aus der Voreinheit E0 nacheinander in ihre Bestandteile aufgetrennt.

Besonders vorteilhaft ist es, verwendete Salzsäure und Natronlauge aus einem Prozessstrom, der gelöstes Natriumchlorid enthält, mit Hilfe einer Elektrodialyse mit bipolarer Membran oder einer Chloralkali-Elektrolyse durch den Einsatz von regenerativer Energie zu gewinnen und somit eine interne Kreisführung zu realisieren. Vorteilhaft ist also, dass die selektiven und relativ teuren Fällungsmittel 23 als hochselektive Fällungsmittel 23, stets mittels der Zugabe von Salzsäure und Natriumlauge, welche relativ günstig sind, mit Hilfe von erneuerbaren Energien zurückgewonnen werden können.

Das Verfahren kann zweckmäßigerweise mit Verfahren aus dem Stand der Technik kombiniert werden, beispielsweise können mit einer Sulfid-Fällung Calcium bzw. Schwermetalle vor der erfindungsgemäßen Feststofffällung in Schritt S1 abgetrennt werden. Beim Auftrennen von Eudialyt-Lösungen hätte man beim ersten Schritt S1 das Problem, dass neben den Seltenerd-Oxalaten auch Calcium-Oxalat ausfallen würde. Nachdem das Oxalat zurückgewonnen wird und sich Seltenerd-Elemente relativ gut von Calcium trennen lassen, stellt diese zusätzliche Fällung kein großes Problem dar. Alternativ kann man ebenso zunächst mit Hilfe einer Sulfid-Fällung das Calcium als Sulfid ausfällen, wobei die gewünschten Seltenerd-Elemente in Lösung verbleiben.

Verbleibende Wertstoffgemische 50 können komplett beispielsweise als Carbonat gefällt werden und nach einer Laugung einem erfindungsgemäßen Prozess gemäß Figur 2 oder Figur 3 wieder zugeführt werden. So können die Ausfällungen des Feststoffs 24 im ersten Schritt S1 deutlich unterstöchiometrisch durchgeführt werden, was die jeweiligen Selektivitäten erhöht und somit reinere Produkte der Wertstoffe W liefert.

Es ist aus dem Stand der Technik bekannt, dass Oxalate Seltenerd-Elemente in Gegenwart von Eisen sowie auch Succinate Eisen in Gegenwart der Seltenerd-Elemente oder Zirkonium selektiv als Tartrate gefällt werden können. Allgemein gesprochen haben derartige organische Salze bzw. Basen eine hohe Selektivität bezüglich unterschiedlicher Elemente bei ihrer Ausfällung. Erfindungsgemäß werden diese Selektivitäten genutzt und durch den Einsatz insbesondere von Salzsäure und Natronlauge diese wieder zu gewinnen, so dass sie bei den Verfahren und in der Vorrichtung nicht verbraucht werden.

Erfindungsgemäß ist erkannt worden, hochselektive Fällungsmittel 23, wie es beispielsweise Oxalate, Succinate, Tartrate, Malonate, Acetate und/oder Citrate sein können, bereits sehr früh in einer Prozesskette einzusetzen. Auf diese Weise lassen sich auch komplexe Wertstoff-Mischlösungen, die relativ niedrige Konzentrationen an Wertstoffe W aufweisen, gewinnbringend verarbeiten. Dies ist insofern von Vorteil, da der Trend zum Ausbeuten von unkonventionellen Lagerstätten, wie z.B. Eudialyt-haltige, derzeit in Betracht gezogen wird. Vorteilhaft ist, dass diese Lagerstätten oft keine oder lediglich wenig radioaktive Begleitstoffe enthalten im Gegensatz zu herkömmlichen konventionellen Monazit-haltigen Lagerstätten. Die Erfindung kann jedoch ebenso gewinnbringend im Recycling von Magnetlegierungen eingesetzt werden, bei denen beispielsweise konzentrierte Lösungen, die gelöstes Eisen und Neodym nebeneinander enthalten, aufgetrennt werden.

Figur 3 zeigt erfindungsgemäße Kombinationen verschiedener Fällungsabläufe gemäß Figur 2 zur Auftrennung eines mindestens einen Wertstoff W aufweisenden Gemisches. Bezugszeichen 40 zeigt eine Gesamteinheit GE, beispielsweise eine chemische Prozessanlage, wobei mehrere Gesamteinheiten GE bzw. Fällungseinheiten 20 gemäß Figur 2 kombiniert werden. Bezugszeichen 41 bezeichnet hier eine erste wässrige Lösung 41 mit einem Wertstoffgemisch, das beispielsweise Chloride der Seltenerd-Elemente Fe und Zr aufweist. Eine erste Gesamteinheit G42 bewirkt eine Abtrennung eines ersten Wertproduktes gemäß einer Gesamteinheit 20 nach Figur 2 beispielsweise mittels Oxalat. Eine abgeleitete wässrige Lösung 43 enthält das erste Wertprodukt beispielsweise in Form von Seltenerd-Chloriden. Eine verbleibende wässrige Lösung 44 wird einer Gesamteinheit 45 in Ausgestaltung der Gesamteinheit GE20 nach Figur 2 zugeführt, wobei ein zweites Wertprodukt beispielsweise mittels Tartrat abgetrennt wird. Eine abgeführte wässrige Lösung 46 enthält das zweite Wertprodukt, beispielsweise ZirkoniumChlorid. Eine verbleibende wässrige Lösung 47 wird einer weiteren Gesamteinheit GE49 in Form einer Gesamteinheit GE20 der Figur 2 zugeführt. Aus der Gesamteinheit GE49 kann wässrige Lösung 48 eines dritten Wertproduktes beispielsweise EisenChlorid entnommen werden. In der Einheit 49 erfolgt die Abtrennung des dritten Wertproduktes analog zu Figur 2, beispielsweise mittels Zugabe von Succinat. Als Abschluss kann eine wässrige Rest-Lösung 50 entnommen werden, die beispielsweise nicht-abgetrennte Wertprodukte und gelöstes NaCl aufweist.

Es kann, je nach Zusammensetzung der Wertstofflösung 41, zweckmäßig sein, die Fällungen unterstöchiometrisch durchzuführen, um die Selektivitäten der einzelnen Fällungen möglichst hoch zu halten. In diesem Fall würden Wertstoffe W in Lösung 50 verbleiben. Diese würde man dann vollständig fällen, beispielsweise als Tartrate mit Recycling oder als Carbonate ohne Recycling. Die Feststoffe werden daraufhin wieder aufgelöst und im Kreis geführt, indem sie wieder über Lösung 41 dem selektiven Trennprozess zugeführt werden. Alternativ zur Verwendung von Salzsäure kann ebenso Schwefelsäure verwendet werden, wobei nachteiligerweise eine erschwerte Rückgewinnung im Prozess ausgeführt werden muss.

Figur 4 zeigt ein weiteres Ausführungsbeispiel eines erfindungsgemäßen Verfahrens.

Figur 4 zeigt wie in einem ersten Schritt S1 mittels zu der ersten wässrigen Lösung ausgeführtes Zuführen des hochselektiven Fällungsmittels als organisches Salz, insbesondere mit Na-Anteil, aus einer ersten Säure ein das Fällungsmittel, den Wertstoff und Begleitstoffe aufweisender Feststoff ausgefällt wird, wie in einem zweiten Schritt S2 mittels Abtrennen des Feststoffes eine zweite wässrige Lösung erzeugt wird, wie in einem dritten Schritt S3 mittels Zuführen einer zweiten Säure, insbesondere Mineralsäure, insbesondere Salzsäure, der Feststoff aufgelöst und eine dritte wässrige Lösung aufweisend ein den Wertstoff aufweisendes Salz der zweiten Säure mit der zusätzlich gelösten ersten Säure erzeugt wird; und wie in einem vierten Schritt S4 mittels Zuführen eines organischen, insbesondere unpolaren, Lösungsmittels, insbesondere Kerosin, und mittels Zuführen einer Base, insbesondere Natronlauge, das Fällungsmittel aus der ersten Säure als wässrig gelöstes organisches Salz wiedergewonnen und der Wertstoff als wässrig gelöstes Salz abgetrennt wird. In einem fünften Schritt S5 werden die ersten bis vierten Schritte S1 bis S4 in jeweils aufeinanderfolgenden Zyklen mittels verschiedener hochselektiver Fällungsmittel an der jeweils in einem vorherigen Zyklus im zweiten Schritt S2 erzeugten zweiten wässrigen Lösung anstelle der ersten oder zusammen mit neuer erster wässrigen Lösung ausgeführt, um nacheinander hochselektiv verschiedene Wertstoffe W von Begleitstoffen B abzutrennen.

## Patentansprüche

1. Verfahren zum Auftrennen einer mindestens einen Wertstoff (W), insbesondere ein Element aus der Gruppe der Seltenen Erden, und Begleitstoffe (B), insbesondere verunreinigende Elemente, aufweisenden ersten wässrigen Lösung (21; 41) eines Rohstoffs in dessen Bestandteile,
**dadurch gekennzeichnet, dass**
aus der ersten wässrigen Lösung (21; 41) der Wertstoff (W) mittels eines hochselektiven Fällungsmittels (23) abgetrennt und das Fällungsmittel (23) wiedergewonnen wird.

2. Verfahren nach Anspruch 1,
**dadurch gekennzeichnet, dass**
in einem ersten Schritt (S1) mittels zu der ersten wässrigen Lösung (21, 41) ausgeführtes Zuführen des hochselektiven Fällungsmittels (23) als organisches Salz, insbesondere mit Na-Anteil, aus einer ersten Säure (10) ein das Fällungsmittel (23) und den Wertstoff (W) enthaltender Feststoff (24) ausgefällt wird;
in einem zweiten Schritt (S2) mittels Abtrennen des Feststoffes (24) eine zweite wässrige Lösung (34; 44) erzeugt wird; in einem dritten Schritt (S3) mittels Zuführen einer zweiten Säure (26), insbesondere einer Mineralsäure, insbesondere Salzsäure, der Feststoff (24) aufgelöst und eine dritte wässrige Lösung (27) aufweisend ein den Wertstoff (W) aufweisendes Salz der zweiten Säure (26) mit der zusätzlich gelösten ersten Säure (10) erzeugt wird;
in einem vierten Schritt (S4) mittels Zuführen eines organischen, insbesondere unpolaren, Lösungsmittels (29), insbesondere Kerosin, und mittels Zuführen einer Base (33), insbesondere Natronlauge, das Fällungsmittel (23) aus der ersten Säure (10) als wässrig gelöstes organisches Salz wiedergewonnen und der Wertstoff (W) als wässrig gelöstes Salz (30) abgetrennt wird.

3. Verfahren nach Anspruch 1 oder 2,
**dadurch gekennzeichnet, dass**
vor dem ersten Schritt die erste wässrige Lösung (21; 41) aus dem Rohstoff in Ausgestaltung eines Seltene Erden aufweisenden Minerals, insbesondere Eudialyts, insbesondere in Ausgestaltung eines Erzes oder Erzkonzentrates, mittels Zuführen einer dritten Säure, insbesondere Mineralsäure, insbesondere Salzsäure, und mittels Aufschließens erzeugt wurde und Wertstoffe (W) beispielsweise insbesondere Seltene Erdenelemente, Zirkonium, Eisen und/oder Mangan, und Begleitstoffe (B) beispielsweise insbesondere Calcium, Titan, Thorium und/oder Uran sind.

4. Verfahren nach Anspruch 1, 2 oder 3,
**dadurch gekennzeichnet, dass**
das hochselektive Fällungsmittel (23) Oxalate, Succinate, Tartrate, Malonate, Citrate oder Acetate bzw. die entsprechend jeweils dazugehörige erste Säure (10) Oxalsäure, Bernsteinsäure, Weinsäure, Malonsäure, Zitronensäure oder Essigsäure umfasst.

5. Verfahren nach Anspruch 1, 2, 3 oder 4,
**dadurch gekennzeichnet, dass**
die ersten bis vierten Schritte (S1-S4) in jeweils aufeinanderfolgenden Zyklen mittels verschiedener hochselektiver Fällungsmittel (23) an der jeweils in einem vorherigen Zyklus im zweiten Schritt (S2) erzeugten zweiten wässrigen Lösung (34; 44) anstelle der ersten oder zusammen mit neuer erster wässrigen Lösung (21; 41) ausgeführt werden, um nacheinander hochselektiv verschiedene Wertstoffe (W) von Begleitstoffen (B) abzutrennen.

6. Verfahren nach einem der vorhergehenden Ansprüche 2 bis 5,
**dadurch gekennzeichnet, dass**
die in dem dritten Schritt (S3) zugeführte zweite Säure (26) und/oder eine/die vor dem ersten Schritt (S1) zugeführte dritte Säure Salzsäure und die in dem vierten Schritt (S4) zugeführte Base (33) Natronlauge sind, die, insbesondere mittels mindestens einer regenerativen Energiequelle, aus einem gelöstes Natriumchlorid aufweisenden Prozessstrom mittels Elektrodialyse mittels einer bipolaren Membran oder einer Chloralkalielektrolyse gewonnen werden, wobei das gelöste Natriumchlorid insbesondere aus oder nach dem vierten Schritt (S4) gewonnen wird.

7. Verfahren nach einem der vorhergehenden Ansprüche, **dadurch gekennzeichnet, dass**
in dem ersten Schritt (S1) vor dem Zuführen des hochselektiven Fällungsmittels (23) mittels Zuführen eines Sulfids Calcium oder Schwermetalle abgetrennt werden.

8. Verfahren nach einem der vorhergehenden Ansprüche 2 bis 7,
**dadurch gekennzeichnet, dass**
die in dem zweiten Schritt (S2) erzeugte zweite wässrige Lösung (34; 44) vollständig, beispielsweise als Carbonat, gefällt wird und nach einer Laugung anstelle der ersten oder zusammen mit neuer erster wässrigen Lösung (21; 41) dem ersten Schritt (S1) zugeführt wird.

9. Vorrichtung zum Auftrennen einer mindestens einen Wertstoff (W), insbesondere ein Element aus der Gruppe der Seltenen Erden, und Begleitstoffe (B), insbesondere verunreinigende Elemente, aufweisenden ersten wässrigen Lösung (21; 41) eines Rohstoffs in dessen Bestandteile,
**dadurch gekennzeichnet, dass**
in einer Gesamteinheit (GE; 20) aus der ersten wässrigen Lösung (21; 41) der Wertstoff (W) mittels eines hochselektiven Fällungsmittels (23) abgetrennt und das Fällungsmittel (23) wiedergewonnen wird.

10. Vorrichtung nach Anspruch 9,
**dadurch gekennzeichnet, dass**
in einer ersten Einheit (E1) der Gesamteinheit (GE; 20) in einem ersten Schritt (S1) mittels zu der ersten wässrigen Lösung (21, 41) ausgeführtes Zuführen eines hochselektiven Fällungsmittels (23) als organisches Salz, insbesondere mit Na-Anteil, aus einer ersten Säure (10) ein das Fällungsmittel (23), den Wertstoff (W) und Begleitstoffe (B) aufweisender Feststoff (24) ausgefällt wird;
in der ersten Einheit (E1) in einem zweiten Schritt (S2) mittels Abtrennen des Feststoffes (24) eine zweite wässrige Lösung (34; 44) erzeugt wird;
in einer zweiten Einheit (E2) in einem dritten Schritt (S3) mittels Zuführen einer zweiten Säure (26), insbesondere Mineralsäure, insbesondere Salzsäure, der Feststoff (24) aufgelöst und eine dritte wässrige Lösung (27) aufweisend ein den Wertstoff (W) aufweisendes Salz der zweiten Säure (26) mit der zusätzlich gelösten ersten Säure (10) erzeugt wird;
in einer dritten Einheit (E3) in einem vierten Schritt (S4) mittels Zuführen eines organischen, insbesondere unpolaren, Lösungsmittels (29), insbesondere Kerosin, und in einer vierten Einheit (E4) mittels Zuführen einer Base (33), insbesondere Natronlauge, das Fällungsmittel (23) aus der ersten Säure (10) als wässrig gelöstes organisches Salz wiedergewonnen und der Wertstoff (W) als wässrig gelöstes Salz (30) abgetrennt wird.

11. Vorrichtung nach Anspruch 10,
**dadurch gekennzeichnet, dass**
in einer Voreinheit (E0) vor dem ersten Schritt (S1) die erste wässrige Lösung (21; 41) aus dem Rohstoff in Ausgestaltung eines Seltene Erden aufweisenden Minerals, insbesondere Eudialyts, insbesondere in Ausgestaltung eines Erzes oder Erzkonzentrates, mittels Zuführen einer dritten Säure, insbesondere Mineralsäure, insbesondere Salzsäure, und mittels Aufschließens erzeugt wurde.

12. Vorrichtung nach Anspruch 9, 10 oder 11,
**dadurch gekennzeichnet, dass**
in der Gesamteinheit (GE; 40) die ersten bis vierten Schritte (S1-S4) in jeweils aufeinanderfolgenden Zyklen mittels verschiedener hochselektiver Fällungsmittel (23) an der jeweils in einem vorherigen Zyklus im zweiten Schritt (S2) erzeugten zweiten wässrigen Lösung (34; 44) anstelle der ersten oder zusammen mit neuer erster wässrigen Lösung (21; 41) ausgeführt werden, um nacheinander hochselektiv verschiedene Wertstoffe (W) von Begleitstoffen (B) abzutrennen.

13. Vorrichtung nach einem der vorhergehenden Ansprüche 9 bis 12,
**dadurch gekennzeichnet, dass**
die in der zweiten Einheit (E2) in dem dritten Schritt (S3) zugeführte zweite Säure (26) und/oder eine/die in der Voreinheit (E0) vor dem ersten Schritt (S1) zugeführte dritte Säure Salzsäure und die in der vierten Einheit (E4) in dem vierten Schritt (S4) zugeführte Base (33) Natronlauge sind, die, insbesondere mittels mindestens einer regenerativen Energiequelle (EQ), aus einem gelöstes Natriumchlorid aufweisenden Prozessstrom mittels Elektrodialyse mittels einer bipolaren Membran oder einer Chloralkalielektrolyse gewonnen werden, wobei das gelöste Natriumchlorid insbesondere aus oder nach dem vierten Schritt (S4) aus der dritten Einheit (E3) und der vierten Einheit (E4) gewonnen wird.

14. Vorrichtung nach einem der vorhergehenden Ansprüche 9 bis 13,
**dadurch gekennzeichnet, dass**
die Voreinheit (E0) ein erster Laugungsreaktor,
die erste Einheit (E1) ein Fällungstank,
die zweite Einheit (E2) ein zweiter Laugungsreaktor,
die dritte Einheit (E3) eine Extraktionseinheit,
die vierte Einheit (E4) eine Stripp-Einheit und/oder die Gesamteinheit (GE) eine Prozessanlage sind/ist.
